# EUROPÄISCHE PATENTSCHRIFT

(11) **EP 2 601 718 B1**
(45) Veröffentlichungstag und Bekanntmachung des Hinweises auf die Patenterteilung: **24.02.2016**
(21) Anmeldenummer: 11743808.5
(22) Anmeldetag: 03.08.2011
(51) Int. Cl.: H02G 3/08, H02G 15/013, H02G 3/22, F21V 27/02

(54) **BELEUCHTUNGSVORRICHTUNG UND DICHTELEMENT HIERFÜR**
ILLUMINATING DEVICE AND SEALING ELEMENT THEREFOR
DISPOSITIF D'ÉCLAIRAGE ET ÉLÉMENT D'ÉTANCHÉITÉ ASSOCIÉ

(30) Priorität: 04.08.2010 DE 102010033297
(43) Veröffentlichungstag der Anmeldung: 12.06.2013
(73) Patentinhaber: Hella KGaA Hueck & Co, 59552 Lippstadt (DE)
(72) Erfinder: KERPE, Alexander, 59555 Lippstadt (DE); KLEINEMEIER, Hendrik, Rietberg 33397 (DE)
(74) Vertreter: Lohr, Georg
(86) Internationale Anmeldenummer: PCT/EP2011/063354
(87) Internationale Veröffentlichungsnummer: WO 2012/017000

(56) Entgegenhaltungen:
- EP-A2- 0 301 236
- WO-A1-01/57981
- DE-A1- 10 338 644
- DE-C1- 3 417 811
- FR-A1- 2 915 326
- FR-A3- 2 493 958
- US-A- 5 403 976
- US-A1- 2001 002 622
- US-B2- 7 004 789

## Beschreibung

Die Erfindung betrifft eine Beleuchtungsvorrichtung für Straßen mit einem eine Anzahl von Lichtquellen aufweisenden Gehäuse und mit einem mindestens eine Leitung führenden und mit einer Ummantelung versehenen Kabel, das über ein Dichtelement gegenüber einer Kabeldurchführung des Gehäuses abgedichtet angeordnet ist.

Beleuchtungsvorrichtungen für Straßen weisen ein Gehäuse zur Aufnahme von Lichtquellen, einer elektronische Ansteuereinrichtung, Steckelementen und dergleichen auf. Da in dem Gehäuse angeordnete elektrische Verbraucher mit elektrischem Strom versorgt werden müssen, weist das Gehäuse eine Kabeldurchführung auf, durch die ein vorzugsweise elektrisches Kabel durchsteckbar ist. Zur Abdichtung des Kabels in der Kabeldurchführung ist es üblich, eine Verschraubung mit Dichtelementen wie zum Beispiel Dichtringen, Dichthüllen, Dichtmuffen oder dergleichen vorzusehen. Nachteilig hieran ist, dass die Montage relativ aufwändig ist bzw. die Dichtheit nicht immer gewährleistet ist.

Aufgabe der vorliegenden Erfindung ist es daher, eine Beleuchtungsvorrichtung bzw. ein Dichtelement für eine Kabeldurchführung derart weiterzubilden, dass auf einfache Weise ein hoher Grad an Dichtheit bei Kabeldurchführungen erzielt wird.

Zur Lösung dieser Aufgabe ist die erfindungsgemäße Beleuchtungsvorrichtung in Verbindung mit dem Oberbegriff des Patentanspruchs 1 durch die kennzeichnenden Merkmale des Patentanspruchs 1 definiert.

US 5,403,976 beschreibt eine Kabeldurchführung eine Beleuchtungsvorrichtung. Die entsprechende Gehäuseöffnung ist rohrförmig ausgeführt, wobei das freie Ende des Rohres in den Innenraum des Gehäuses weist. Durch Aufschieben eines ringförmigen Gegenstücks wird das Rohrstück gestaucht und an das Kabel angepresst. Dadurch erfolgt sowohl eine Zugentlastung des Kabels als auch eine Abdichtung der Kabeldurchführung.

FR 2493 958 ist eine Leuchte mit einem Gehäuse, das eine Öffnung als Kabeldurchführung aufweist beschrieben. Von Innen ist in die Öffnung eine Stopfbüchse eingesetzt. Zur Abdichtung zwischen dem Gehäuse und der Stoffbüchse sitzt ein O-Ring in einer Ringnut des Gehäuses. Die Abdichtung zwischen dem Kabel und der Stopfbüchse erfolgt durch Zusammenpressen eines Gummiringes mittels einem von der Innenseite in die Stopfbüchse eingesetztem Schraubeinsatz.

EP 0 301 236 A2 offenbart eine spritzwassergeschützte Strahlerleuchte mit einem Gehäuse aus einem stranggepressten Endlosprofil. Das Gehäuse hat einen Deckel mit einer abgedichteten Kabeldurchführung für eine elektrische Zuleitung.

DE 103 38 644 A1 offenbart ein Dichtungs- und Befestigungselement zum Einsetzen in Wanddurchbrüche oder zum Einklemmen in Wandausnehmungen von Karosserieteilen. Das Dichtungs- und Befestigungselement besteht aus einem Schrumpfschlauch, an den eine Schlauchtülle angespritzt wird. Der Schrumpfschlauch und die Schlauchtülle bilden dabei einen Durchgangskanal, in den anschließend ein Kabel eingezogen werden kann. Danach wird der Schlauchschrumpf eingeschrumpft. Nun sitzt das Dichtungselement auf dem Kabel und kann ein einen Wanddurchbruch eingeklemmt werden.

US 2001/0002622 A1 offenbart eine Befestigung eines Koaxialkabels an einem geschirmten Gehäuse für HF-technische Geräte, wobei die üblicherweise geerdete Abschirmung des Koaxialkabels mit dem Schirm des Gehäuses verbunden werden soll. Dabei werden die mechanische Kabelabfangung und die Kontaktierung des Außenleiters mit dem Gehäuse funktionell separiert. Dazu hat das Kabel eine angespritzte Zugentlastung die quer zur Kabellängsachse in eine an der Au-ßenseite des Gehäuses angespritzte Zugenlastungsaufnahme eingeschoben wird. Die Kontaktierung der Kabelabschirmung mit dem Gehäuseschirm erfolgt im inneren des Gehäuses, um einen guten Brührschutz zu realisieren.

US 7,004,789 B1 und DE 3417811 C1 offenbaren je einen Steckverbinder mit einem angespritzen Gehäuse, wobei zumindest bei der US 7,004,789 B1 das Gehäuse mehrstückig ist und nur die Kabelabfangung als Teil des Gehäuses an einen Isoliermantel des Kabels angespritzt ist.

Der besondere Vorteil der Erfindung besteht darin, dass durch ein an eine Ummantelung eines Kabels angeformtes Dichtelement auf einfache Weise eine definierte und dichte Lage des Kabels in einer Kabeldurchführung gewährleistet ist. Hierbei definiert das Dichtelement die Lage des Kabels in der Montagestellung bzw. in der Dichtstellung. Zum Verbringen des Kabels in die Dichtstellung braucht dieses lediglich unter Anlage einer Mantelfläche des Dichtelementes an einem Öffnungsrand der Kabeldurchführung in Axialrichtung des Kabels so weit durchgesteckt werden, bis die Dichtstellung erreicht ist. Wird das Kabel zusammen mit dem Dichtelement von einer kabelendnahen Seite, nämlich von einer inneren Seite her in die Dichtstellung verbracht, kann eine verbesserte Zugentlastung des Kabels erzielt werden. Ein weiterer Vorteil der Erfindung besteht darin, dass eine Konfektionierung des Kabels innerhalb des Gehäuses mittels Verbindung von Leitungsenden des Kabels mit Steckverbindern ermöglicht wird, bevor das Kabel durch die Kabeldurchführung gesteckt werden muss. Das Dichtelement ermöglicht eine formschlüssige Halterung des Kabels in der Kabeldurchführung.

Nach einer Weiterbildung der Erfindung ist das Dichtelement roationssymmetrisch ausgebildet, so dass es bei der Montage des Kabels in der Kabeldurchführung auf die Lage des Kabels in Umfangsrichtung nicht ankommt. Hierdurch kann die Montage des Kabels vereinfacht werden.

Nach einer Weiterbildung der Erfindung ist das Dichtelement von der dem Inneren des Gehäuses zugewandten Seite her konusförmig verjüngt ausgebildet, so dass das Kabel zusammen mit dem Dichtelement von einer Innenseite des Gehäuses in Richtung einer Außenseiten desselben in die Dichtstellung verbracht werden kann. Vorteilhaft kann durch Bewegen des Kabels nach und nach in Richtung der Außenseite der Dichtheitsgrad erhöht werden.

Nach einer Weiterbildung der Erfindung weist das Dichtelement neben einer konusförmigen Mantelfläche einen Kopf auf, der als Anschlagfläche für einen Rand der Kabeldurchführung dient. Er definiert zum einen die Dichtstellung und zum anderen verhindert er ein Durchrutschen des Dichtelementes durch die Kabeldurchführung.

Nach einer Weiterbildung der Erfindung ist das Kabel in einem zu der Kabeldurchführung benachbarten Bereich mittels einer Vergussmasse fixiert. Die aushärtbare Vergussmasse wird in diesen Bereich verbracht, sobald das Kabel die Dichtstellung erreicht hat. Vorteilhaft wird hierdurch das Kabel in der Dichtstellung fixiert. Darüber hinaus ermöglicht die Ausbildung des Dichtelementes eine einfache Fehlerkorrektur bei der Herstellung, da bei erkennbaren Undichtigkeiten bzw. bei Austritt der noch zähflüssigen Vergussmasse aus der Kabeldurchführung durch Zug am Kabel das Dichtelement fester in die Kabeldurchführung gepresst und somit der Austritt der Vergussmasse gestoppt werden kann.

Nach einer Weiterbildung der Erfindung weist das Gehäuse im Bereich der Kabeldurchführung abragende Klemmrippen auf, die zur Positionierung des Kabels beim Verbringen desselben in die Dichtstellung dienen. Hierbei wird eine radiale Anpresskraft auf die Ummantelung des Kabels durch die Klemmrippen ausgeübt und somit eine Fixierung des Kabels in dem Gehäuse ermöglicht.

Nach einer Weiterbildung der Erfindung weist ein die Kabeldurchführung bildender Rand des Gehäuses in Axialrichtung versetzte Randflächen auf, so dass das Gehäuse durch schieberfreies Spritzgießen herstellbar ist. Der Herstellungsaufwand kann somit verringert werden. Das Dichtelement ermöglicht durch die konusförmige Ausbildung der Mantelflächen eine angepasste und abdichtende Lagerung des Kabels in der Kabeldurchführung.

Zur Lösung der Aufgabe ist ein Dichtelement für eine Kabeldurchführung nach den Ansprüchen 1 bis 9 vorgesehen.

Vorteilhaft ermöglicht das erfindungsgemäße Dichtelement eine einfache und wirksame Abdichtung eines Kabels in einer Kabeldurchführung. Die Kabeldurchführung ist im Wesentlichen durch eine Bohrung in einer Wand eines Gehäuses oder dergleichen gebildet.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:
- Fig. 1: einen Horizontalschnitt durch eine Kabeldurchführung, bei der sich ein mit einem Dichtelement versehenes Kabel in einer Dichtstellung befindet,
- Fig. 2: einen Vertikalschnitt durch die Kabeldurchführung gemäß Figur 1 und
- Fig. 3: einen Vertikalschnitt durch die Kabeldurchführung gemäß Figur 1, wobei zur Fixierung des Kabels in einem kabelführungsnahen Bereich eine Vergussmasse eingebracht ist.

Ein erfindungsgemäßes Dichtelement kann in Beleuchtungsvorrichtungen für Straßen oder Fahrzeuge oder in anderen Vorrichtungen eingesetzt werden, bei der eine Abdichtung eines Kabels in einer Wandöffnung vorgesehen sein soll. Das Kabel kann eine Anzahl von elektrischen oder optischen Leitungen führen.

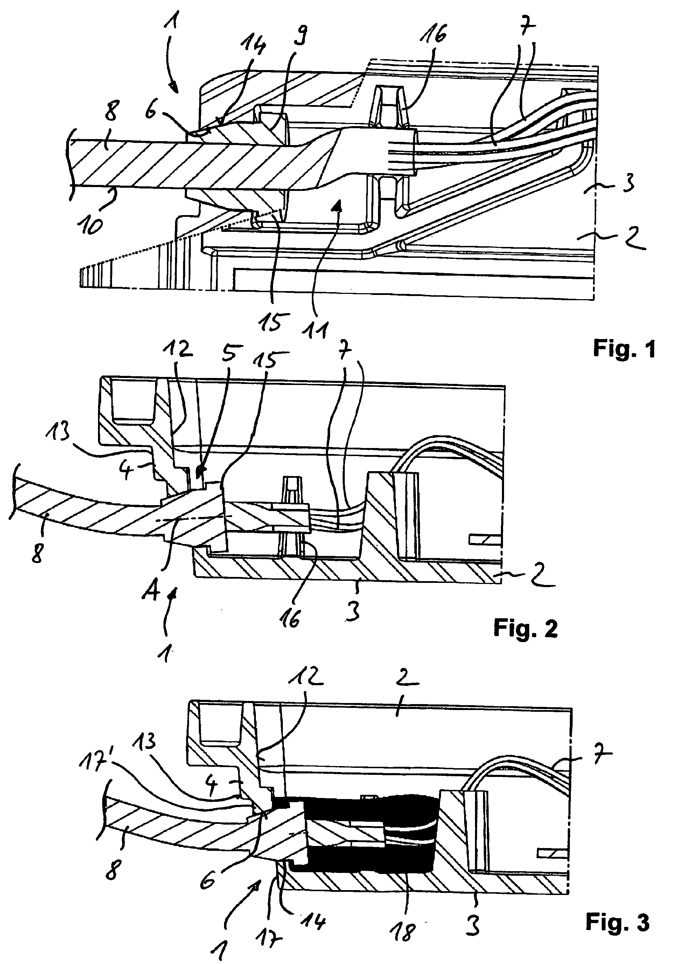

Nach einer Ausführungsform der Erfindung gemäß den Figuren 1 bis 3 ist eine Kabeldurchführung 1 in einem Gehäuse 2 einer Beleuchtungsvorrichtung für Straßen vorgesehen, wobei in dem Gehäuse 2 eine Anzahl von nicht dargestellten Lichtquellen, Reflektoren oder andere optische Mittel sowie eine elektronische Ansteuereinrichtung untergebracht sind. Das Gehäuse 2 ist topfförmig ausgebildet und weist eine Bodenwand 3 sowie seitlich von derselben abragende Seitenwände 4 auf. Die Kabeldurchführung 1 ist in einem zu der Bodenwand 3 nahen Bereich der Seitenwand 4 angeordnet, wobei eine vorzugsweise kreisrunde Bohrung 5 durch einen kreisförmigen Rand 6 der Seitenwand 4 begrenzt ist.

Zur Abdichtung eines vorzugsweise mehrere elektrische Leitungen 7 führendes Kabel 8 ist ein Dichtelement 9 vorgesehen, das an einer Ummantelung 10 des Kabels 8 angeformt ist. Das Dichtelement 9 kann aus einem gummiartigen (elastischen) Kunststoffmaterial bestehen, das durch Umspritzung mit der Ummantelung 10 des Kabels 8 verbunden ist. Das Dichtelement 9 ist rotationssymmetrisch zu einer Achse A des Kabels 8 ausgebildet. In Figur 1 ist das Dichtelement 9 zur besseren Erkennbarkeit unterschiedlich schraffiert zum Kabel 8 dargestellt.

Das Dichtelement 9 ist von einer kabelendseitennahen Seite bzw. einer inneren Seite 11 der Kabeldurchführung 1 bzw. des Gehäuses 2 her konusförmig verjüngend ausgebildet, so dass es nach und nach unter Erhöhung einer Anpresskraft gegen den Rand 6 der Bohrung 5 von einer Innenseite 12 des Gehäuses 2 in Richtung einer Außenseite 13 desselben in eine Dichtstellung bringbar ist. Hierbei schmiegt sich eine konusförmige Mantelfläche 14 des Dichtelementes 9 an den sich von der Innenseite 12 des Gehäuses 2 in Richtung der Außenseite 13 desselben verjüngenden Rand 6 der Bohrung 5 an.

Das Dichtelement 9 weist auf einer der kabelendseitennahen Seite 11 einen im Vergleich zur Mantelfläche 14 verbreiterten Kopf 15 auf, der als Anschlag für das Dichtelement 9 in der Dichtstellung dienen kann. In jedem Fall verhindert der Kopf 15 ein Durchrutschen des Dichtelementes 9 beim Durchstecken des Kabels 8 durch die Bohrung 5 von der Innenseite 12 des Gehäuses 2 zur Außenseite 13 desselben her.

Von der Bodenwand 3 des Gehäuses 2 ragt in einem zu der Kabeldurchführung 1 nahen Bereich innenseitig mindestens eine Klemmrippe 16 ab, die eine teilkreisförmige Ausformung aufweist. Die teilkreisförmige Ausformung weist einen an den Außendurchmesser des Kabels angepassten Durchmesser auf, so dass das Kabel 8 unter Beaufschlagung einer Presskraft durch die Klemmrippe 16 in der Dichtstellung desselben positioniert bzw. fixiert werden kann.

Wie insbesondere aus Figur 3 ersichtlich ist, weist der Rand 6 der Bohrung 5 in Axialrichtung A des Kabels 8 versetzt zueinander angeordnete Randflächen 17, 17' auf. Sowohl eine zur Bodenwand 3 nahe Randfläche 17 als auch eine zur Bodenwand 3 ferne Randfläche 17' liegen an der Mantelfläche 14 des Dichtelementes 9 an. Eine Axiallänge der Mantelfläche 14 ist so gewählt, dass die Randflächen 17, 17' jeweils an der Mantelfläche 14 in der Dichtstellung anliegen. Im Bereich der Kabeldurchführung 1 als auch in einem weiteren Bereich ist die Seitenwand 4 bezogen auf die Bodenwand 3 seitlich ausladend ausgebildet, so dass das Gehäuse 2 durch schieberfreies Spritzgießen herstellbar ist. Zu diesem Zweck sind auch die Klemmrippen 16 verjüngend zum freien Ende derselben angeordnet. Vorteilhaft kann hierdurch der Herstellungsaufwand verringert werden.

Zur Montage des Kabels 8 an dem Gehäuse 2 wird in einem ersten Schritt eine Steckverbindung der kabelendseitigen Leitungen 7 in dem Gehäuse 2 hergestellt. In einem weiteren Schritt wird das Kabel 8 von der Innenseite 12 her durch die Bohrung 5 zur Außenseite 13 hin durchgesteckt, bis unter Anlage der Mantelfläche 14 des Dichtelementes 9 an dem Rand 6 der Bohrung 5 das Kabel 8 eine Dichtstellung in der Kabeldurchführung 1 eingenommen hat. Hierbei kann das Kabel 8 formschlüssig mittels des Dichtelementes 9 in der Kabeldurchführung 1 gehalten sein. In einem weiteren Schritt wird nun durch Einstecken der Kabelummantelung 10 in die Aufnahme der Klemmrippe 16 das Kabel 8 vorzugsweise durch Einpressen in der Dichtstellung positioniert. Nachfolgend wird eine aushärtbare Vergussmasse 18 in den kabeldurchführungsnahen Bereich des Gehäuses 2 bzw. der Bodenwand 3 eingebracht, die das Kabel 8 bzw. das Dichtelement 9 an der Innenseite 12 des Gehäuses 2 vollständig umgibt bzw. abdeckt. Nach Aushärten der Vergussmasse 18 ist das Kabel 8 endgültig in dem Gehäuse 2 fixiert.

Falls sich beim Einbringen der Vergussmasse 18 an die Bodenwand 3 herausstellen sollte, dass das Kabel 8 nicht in ausreichendem Maße abgedichtet in der Kabeldurchführung 1 gelagert ist, was durch Austritt der Vergussmasse 18 durch die Bohrung 5 erkannt werden kann, kann von außen her am Kabel 8 gezogen werden, so dass das elastische Dichtelement 9 in einem festeren Sitz (Dichtstellung) in der Bohrung 5 verschoben werden kann. Nach Aushärten der Vergussmasse 18 ist eine sichere und dichte Festlegung des Kabels 8 an der Kabeldurchführung 1 gewährleistet.

Nach einer nicht dargestellten weiteren Ausführungsform der Erfindung kann das Dichtelement 9 auch zylinderförmig statt konusförmig ausgebildet sein.

### Bezugszeichenliste

- 1: Kabeldurchführung
- 2: Gehäuse
- 3: Bodenwand
- 4: Seitenwand
- 5: Bohrung
- 6: Rand
- 7: elektrische Leitungen
- 8: Kabel
- 9: Dichtelement
- 10: Ummantelung
- 11: kabelendseitennahe Seite
- 12: Innenseite
- 13: Außenseite
- 14: Mantelflächen
- 15: Kopf
- 16: Klemmrippen
- 17, 17': Randflächen
- 18: Vergussmasse

- A: Achse

## Patentansprüche

1. Beleuchtungsvorrichtung für Straßen mit einem eine Anzahl von lichtquellen aufweisenden Gehäuse und mit einem mindestens eine Leitung führenden und mit einer Ummantelung (10) versehenen Kabel (8), das über ein Dichtelement (9) gegenüber einer Kabeldurchführung (1) des Gehäuses (2) abgedichtet angeordnet ist,
wobei die Kabeldurchführung (1) und/oder das Dichtelement (9) derart ausgebildet sind, dass das Dichtelement (9) von einer inneren Seite (11) der Kabeldurchführung (1) her in Dichtstellung bringbar ist, in der das Dichtelement (9) dichtend an einem Rand (6) der Kabeldurchführung (1) anliegt, **dadurch gekennzeichnet, dass** das Dichtelement (9) aus elastischem Kunststoffmaterial besteht das durch Umspritzung an der Ummantelung (10) des Kabels (8) angeformt und dadurch damit verbunden ist.

2. Beleuchtungsvorrichtung nach Anspruch 1,
**dadurch gekennzeichnet, dass**
das Dichtelement (9) rotationssymmetrisch ausgebildet ist.

3. Beleuchtungsvorrichtung nach Anspruch 1 oder 2,
**dadurch gekennzeichnet, dass**
das Dichtelement (9) sich von der inneren Seite (11) der Kabeldurchführung (1) her konusförmig verjüngt erstreckt und/oder dass sich eine durch den Rand (6) der Kabeldurchführung (1) begrenzte Bohrung (5) von einer Innenseite (12) des Gehäuses (2) In Richtung einer Außenseite (13) desselben verjüngend erstreckt.

4. Beleuchtungsvorrichtung nach einem der Ansprüche 1 bis 3,
**dadurch gekennzeichnet, dass**
das Dichtelement (9) einen Kopf (15) aufweist, mittels dessen das Dichtelement (9) gegenüber dem Rand (6) der Kabeldurchführung (1) und/oder der Innenseite (12) des Gehäuses (2) abstützbar ist.

5. Beleuchtungsvorrichtung nach einem der Ansprüche 1 bis 4,
**dadurch gekennzeichnet, dass**
das Dichtelement (9) aus einem elastischen Material besteht.

6. Beleuchtungsvorrichtung nach einem der Ansprüche 1 bis 5,
**dadurch gekennzeichnet, dass**
das Kabel (8) auf einer sich an den Rand (6) der Kabeldurchführung (1) anschließenden Innenseite (12) des Gehäuses (2) mit einer Vergussmasse (18) fixiert ist.

7. Beleuchtungsvorrichtung nach einem der Ansprüche 1 bis 6,
**dadurch gekennzeichnet, dass**
in einem zu der Kabeldurchführung (1) nahen Bereich innenseitig von dem Gehäuse (2) mindestens eine Klemmrippe (16) abragt zur Positionierung des Kabels (8) beim Verbringen desselben in die Dichtstellung.

8. Beleuchtungsvorrichtung nach einem der Ansprüche 1 bis 7,
**dadurch gekennzeichnet, dass**
der die Kabeldurchführung (1) bildende Rand in Axialrichtung versetzt angeordnete Randflächen (17, 17') aufweist, derart, dass das Gehäuse (2) durch schieberfreies Spritzgießen herstellbar ist.

9. Beleuchtungsvorrichtung nach einem der Ansprüche 1 bis 8,
**dadurch gekennzeichnet, dass**
das Gehäuse (2) topfförmig ausgebildet ist, wobei die Kabeldurchführung (1) in einer zur einer Bodenwand (3) senkrecht abragenden Seitenwand (4) angeordnet ist.

## Claims

1. Lighting device for roads with a housing comprising number of light sources, and with a cable (8) leading at least one conduit and provided with a sheat (10), which cable is arranged sealed by a sealing element (9) against a cable passage (1) of the housing (2), wherein the cable passage (1) and/or the sealing element (9) are configured such that the sealing element (9) is arrangable from an inner side (11) of the cable passage (1) in sealing position, in which sealing position the sealing element (9) abuts against an edge (6) of the cable passage (1),
**characterized in that**
the sealing element (9) comprises elastic plastic material, which is formed at the sheath (10) of the cable (8) by molding and is thereby connected to it.

2. Lighting device according to claim 1,
**characterized in that**
the sealing element (9) is rotationally symmetrical.

3. Lighting device according to claim 1 or 2,
**characterized in that**
the sealing element (9) extends conically tapered from the inner side (11) of the cable passage (1), and/or that a bore (5) being confined by the edge (6) of the cable passage (1) extends conically tapered from an inner side (12) of the housing (2) towards an outer side (13) thereof.

4. Lighting device according to one of claims 1 to 3,
**characterized in that**
the sealing element (9) has a head (15), by means of which the sealing element (9) is supportable against the edge (6) of the cable passage (1) and/or the inner side (12) of the housing (2).

5. Lighting device according to one of claims 1 to 4,
**characterized in that**
the sealing element (9) comprises an elastic material.

6. Lighting device according to one of claims 1 to 5,
**characterized in that**
the cable (8) is fixed with a casting compound (18) on an inner side (12) of the housing (2) adjoining to the edge (6) of the cable passage (1).

7. Lighting device according to one of claims 1 to 6,
**characterized in that**
at least one clamping rib (16) protrudes from a region inside the housing (2) being close to the cable passage (1), for positioning the cable (8) when bringing it in the sealing position.

8. Lighting device according to one of claims 1 to 7,
**characterized in that**
the edge forming the cable passage (1) comprises edge surfaces (17, 17') being disposed in axial direction, such that the housing (2) can be produced by slider-free injection molding.

9. Lighting device according to one of claims 1 to 8,
**characterized in that**
the housing (2) is pot-shaped, wherein the cable passage (1) is arranged in a side wall (4) protruding perpendicularly from a bottom wall (3).

## Revendications

1. Dispositif d'éclairage de rues avec un boîtier présentant un certain nombre de sources lumineuses et avec un câble (8) acheminant au moins une ligne et muni d'une enveloppe (10), qui est disposé de façon étanche à l'aide d'un élément d'étanchéité (9) par rapport à une traversée de câble (1) du boîtier (2), dans lequel la traversée de câble (1) et/ou l'élément d'étanchéité (9) sont conformés de telle manière que l'élément d'étanchéité (9) puisse être amené depuis un côté intérieur (11) de la traversée de câble (1) dans la position d'étanchéité dans laquelle l'élément d'étanchéité (9) repose de façon étanche sur un bord (6) de la traversée de câble (1), **caractérisé en ce que** l'élément d'étanchéité (9) se compose de matière plastique élastique formée par injection sur l'enveloppe (10) du câble (8) et reliée avec celle-ci.

2. Dispositif d'éclairage selon la revendication 1, **caractérisé en ce que** l'élément d'étanchéité (9) est de forme symétrique dans le sens de la rotation.

3. Dispositif d'éclairage selon la revendication 1 ou 2, **caractérisé en ce que** l'élément d'étanchéité (9) s'étend en se resserrant en cône depuis le côté intérieur (11) de la traversée de câble (1) et/ou **en ce qu'**un trou percé (5) délimité par le bord (6) de la traversée de câble (1) s'étend en se resserrant d'un côté intérieur (12) du boîtier (2) vers un côté extérieur (13) de celui-ci.

4. Dispositif d'éclairage selon l'une des revendications 1 à 3, **caractérisé en ce que** l'élément d'étanchéité (9) présente une tête (15) au moyen de laquelle l'élément d'étanchéité (9) peut s'appuyer vis-à-vis du bord (6) de la traversée de câble (1) et/ou du côté intérieur (12) du boîtier (2).

5. Dispositif d'éclairage selon l'une des revendications 1 à 4, **caractérisé en ce que** l'élément d'étanchéité (9) se compose d'un matériau élastique.

6. Dispositif d'éclairage selon l'une des revendications 1 à 5, **caractérisé en ce que** le câble (8) est fixé sur un côté intérieur (12) du boîtier (2) faisant suite au bord (6) de la traversée de câble (1) avec une masse d'enrobage (18).

7. Dispositif d'éclairage selon l'une des revendications 1 à 6, **caractérisé en ce que** dans une zone proche de la traversée de câble (1) sur l'intérieur, au moins une nervure de serrage (16) dépasse sur le côté intérieur du boîtier (2) pour positionner le câble (8) lors du placement de celui-ci dans la position d'étanchéité.

8. Dispositif d'éclairage selon l'une des revendications 1 à 7, **caractérisé en ce que** le bord formant la traversée de câble (1) présente des surfaces de bord (17, 17') décalées dans le sens axial, de telle façon que le boîtier (2) puisse être fabriqué par moulage par injection sans tiroirs.

9. Dispositif d'éclairage selon l'une des revendications 1 à 8, **caractérisé en ce que** le boîtier (2) est en forme de pot, la traversée de câble (1) étant disposée dans une paroi latérale (4) qui dépasse verticalement de la paroi de fond (3).
